# EUROPEAN PATENT APPLICATION

(11) **EP 4 811 723 A1**
(43) Date of publication of application: **23.09.2026**
(21) Application number: 25164891.1
(22) Date of filing: 19.03.2025
(51) Int. Cl.: H04L 9/40, G06F 3/12, G06F 21/10, G06F 21/60

(54) **LICENSE MANAGEMENT DEVICE AND LICENSE MANAGEMENT SYSTEM**

(71) Applicant: Toshiba TEC Kabushiki Kaisha, Tokyo 141-8562 (JP)
(72) Inventor: Fukuhara, Takanori, Tokyo, 141-8562 (JP)
(74) Representative: Bandpay & Greuter

(57) **Abstract**

According to one embodiment, a license management device and system are provided to facilitate management of a license for a printing device. The license management device includes a first communication interface, a second communication interface, a memory, and a processor. The first communication interface communicates with a management server. The second communication interface communicates with the printing device that has a specific function whose use may be license-restricted but permitted by a license issued by the management server. The memory stores a license management table that stores the license issued by the management server through the first communication interface. The processor provides the printing device with the license stored in the license management table in response to a request from the printing device through the second communication interface.

## Description

### FIELD

Embodiments described herein relate generally to a license management device and a license management system.

### BACKGROUND

In the related art, a printer (or a printing device) such as a label printer may allow a specific function to be used only by purchasing of a license. For example, some thermal printers used in label printers may have thermal heads having variable dot resolutions. In such a case, a high-resolution printing function of a thermal printer may be enabled only by purchasing a license. The printer may impose a use restriction related to resolution changes and may remove the use restriction by purchasing a license.

However, such a printer has a problem in that each separate user may need to separately purchase a license in order to use a specific function. Therefore, a printer in the related art has a problem that it is not easy to change to a function for which a license has been set, and as a result, a user is often hesitant to purchase a license.

### DISCLOSURE OF THE INVENTION

To this end, a license management device and a license management system are according to appended claims are provided.

### BRIEF DESCRIPTION OF THE DRAWINGS

FIG. 1 is a diagram illustrating a configuration example of an image forming system serving as a license management system including a digital multi-functional peripheral serving as an image forming device including a license management device according to an embodiment.
FIG. 2 is a block diagram of a digital multi-functional peripheral.
FIG. 3 is a block diagram of a label printer serving as a printing device.
FIG. 4 is a block diagram of a management server.
FIG. 5 is a flowchart of license issuance processing executed by a management server.
FIG. 6 is a flowchart of license acquisition processing executed by a digital multi-functional peripheral.
FIG. 7 is a flowchart of license management processing executed by a digital multi-functional peripheral.
FIG. 8 is a flowchart of a label printer.

### DETAILED DESCRIPTION

In order to solve the above problems, embodiments is describe a license management device and a license management system that facilitates management of licenses to be applied to a printing device or the like.

According to one embodiment, a license management device includes a first communication interface, a second communication interface, a memory, and a processor. The first communication interface communicates with a management server. The second communication interface communicates with a printing device having a specific function whose use may be restricted but permitted according to a license issued by the management server. The memory stores a license management table that stores the license issued by the management server and acquired through the first communication interface. The processor provides the printing device with the license stored in the license management table in response to a request from the printing device through the second communication interface.

Hereinafter, certain example embodiments will be described with reference to the drawings.

First, a configuration of an image forming system 1, serving as a license management system, including a digital multi-functional peripheral 3, serving as an image forming device, including a license management device according to an embodiment will be described.

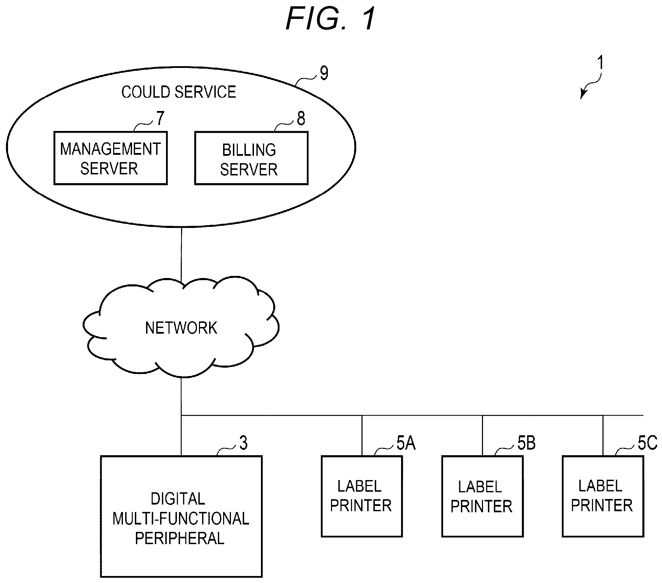

FIG. 1 is a diagram illustrating a configuration example of the image forming system 1 serving as a license management system according to an embodiment.

The image forming system 1 (also referred to as a license management system 1) includes a digital multi-functional peripheral (MFP) 3, label printers 5 (5A, 5B, 5C), a management server 7, and a billing server 8.

The digital multi-functional peripheral 3 is an example of an image forming device including a license management device. The digital multi-functional peripheral 3 incorporating the license management device manages a license applicable to the label printer(s) 5 (or other printing devices). The digital multi-functional peripheral 3 is installed in, for example, a work area such as an office.

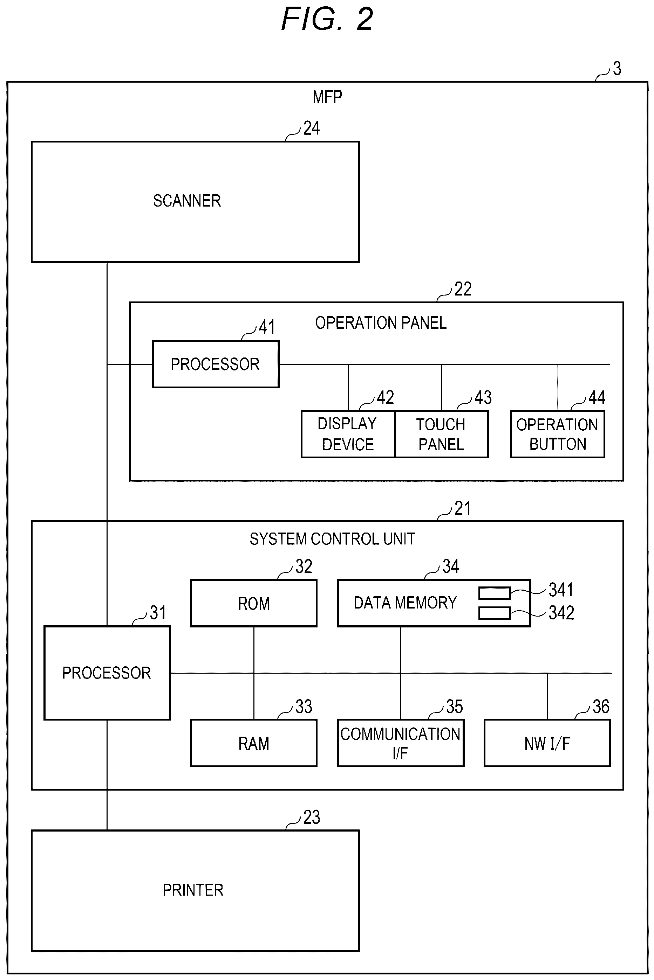

The digital multi-functional peripheral 3 includes, for example, a system control unit 21, an operation panel 22, a printer 23, and a scanner 24 (see FIG. 2). In the digital multi-functional peripheral 3, the system control unit 21 is operated as or functions as a license management device. The digital multi-functional peripheral 3 is able to communicate with the label printers 5A, 5B, and 5C and with the management server 7 via a network.

The digital multi-functional peripheral 3 acquires a license issued by the management server 7 and provides the license acquired from the management server 7 to the label printer 5. For example, the digital multi-functional peripheral 3 requests the management server 7 to issue a license applicable to the label printer 5, and acquires the license issued by the management server 7 in response to the request. The digital multi-functional peripheral 3 stores (manages) the license(s) issued by the management server 7, and provides the stored license(s) in response to a use request from a label printer 5.

Each label printer 5 (5A, 5B, 5C) is an example of a printing device having a specific function whose use restriction may be cancelled by a license. In the present embodiment, the label printer 5 includes a printing mechanism that prints an image on a label by a thermal printing method. In many cases, the label printer 5 has a relatively simple configuration in order to reduce its manufacturing costs, and the like. The label printer 5 is an example of a printing device for which it is difficult to provide the components and/or configuration required for the execution of a license requesting/issuing procedure executed in conjunction with the management server 7 in response to a user operation at the label printer 5.

The types of printing devices having specific functions whose use might be restricted by licensing rules or the like are not limited a label printers or thermal printers. For example, the printing device may include a printing mechanism for an image forming method other than a thermal method, such as an ink jet system. The printing device in the image forming system 1 may be any device having a configuration permitting the receiving of a license from the digital multi-functional peripheral 3.

The management server 7 and the billing server 8 are provided in a cloud service 9 and provides a service such as license issuance to a digital multi-functional peripheral 3 and a label printer 5. In the cloud service 9, the management server 7 has a function of communicating with the digital multi-functional peripheral 3 via a network. The management server 7 issues a license to be used in the label printer 5 in response to a request from the digital multi-functional peripheral 3. The billing server 8 executes billing processing associated with the issuance of the license.

Next, a configuration of the digital multi-functional peripheral 3 according to an embodiment will be described.

FIG. 2 is a block diagram illustrating a configuration example of the digital multi-functional peripheral 3 according to an embodiment.

As illustrated in FIG. 2, the digital multi-functional peripheral 3 includes the system control unit 21 (also referred to as a system controller 21), the operation panel 22, the printer 23, and the scanner 24.

The system control unit 21 controls overall operations of digital multi-functional peripheral 3. The system control unit 21 includes a processor 31, a ROM 32, a RAM 33, a data memory 34, a communication interface (I/F) 35, a network (NW) interface (I/F) 36, and the like.

The processor 31 achieves various kinds of processing functions by executing programs. The processor 31 is, for example, a CPU. The processor 31 is connected to a processor 41 of the operation panel 22, the printer 23, the scanner 24, and the like via an internal interface.

The ROM 32 functions as a program memory for storing a program. The ROM 32 is a non-rewritable nonvolatile memory. The RAM 33 functions as a working memory or a buffer memory. The processor 31 executes various kinds of processing by executing programs stored in the ROM 32 or the data memory 34 using the RAM 33.

The data memory 34 is a rewritable nonvolatile memory. For example, the data memory 34 is implemented by a storage device such as a hard disk drive (HDD) or a solid-state drive (SSD). The data memory 34 stores various kinds of data such as control data, an application program (hereinafter also referred to as an application), setting information, and image data.

In the present embodiment, the data memory 34 stores a license management table 341 and a printer management table 342. The license management table 341 stores management data of a license that can be provided to the label printer 5. The license management table 341 stores information indicating a license issued by the management server 7. The license management table 341 stores information indicating a license provision state to the label printer 5 for each license issued by the management server 7. For example, the license management table 341 stores information indicating a type of a license provided to the label printer 5, the number of stored licenses, and the number of licenses currently being provided (the number of used licenses).

The printer management table 342 stores printer management information for each label printer 5. The printer management table 342 is information related to each label printer 5 as printer management information. For example, the printer management table 342 stores printer management information including information indicating a specific function that can be used by using a license. The printer management table 342 stores an encryption key (e.g., a key code) for each label printer 5 as printer management information. Here, the encryption key for each label printer 5 is key information corresponding to key information (a decryption key) held by each label printer 5.

The communication interface 35 is a communication interface (first communication interface) for performing data communication with each label printer 5 (5A, 5B, 5C). The communication interface 35 may include, for example, an interface for communicating with each label printer 5 used in a work area by wireless or wired communication.

The NW interface 36 is a communication interface (second communication interface) for communicating with each device connected to a network. In the image forming system 1 according to the present embodiment, the NW interface 36 may include an interface for communicating with the management server 7 via the network.

The operation panel 22 is a user interface. The operation panel 22 includes the processor 41, a display device 42, a touch panel 43 (an operation device), and an operation button 44 (an operation device). The display device 42 is a display that displays operation guidance and the like to a user/operator. The touch panel 43 is provided on a display screen of the display device 42. The touch panel 43 detects a position touched by a user on the display screen of the display device 42. The operation button 44 is a button for inputting a predetermined instruction.

The processor 41 of the operation panel 22 controls the operation panel 22. The processor 41 achieves various kinds of processing by executing programs stored in an internal memory or an external memory. The processor 41 is connected to the processor 31 of the system control unit 21, and controls the operation panel 22 according to an instruction from the processor 31 of the system control unit 21. For example, the processor 41 controls a display content to be displayed on the display device 42 according to an instruction from the processor 31 of the system control unit 21. The processor 41 detects an input to the touch panel 43 and the operation button 44 and supplies information indicating an input content to the processor 31 of the system control unit 21.

The printer 23 is an image forming unit provided in the digital multi-functional peripheral 3. The printer 23 forms an image on a medium (image formation medium) such as paper. For example, the printer 23 prints a printing image supplied from the system control unit 21 on paper taken out from a paper feeding cassette. The printer 23 may form an image using any image forming method. For example, the printer 23 may print an image on a medium by an electrophotographic method or may print an image on a medium by an ink jet method.

The scanner 24 is a device that reads an image from a document. The scanner 24 is installed, for example, on an upper portion of a main body of the digital multi-functional peripheral 3. The scanner 24 optically reads an image from a document set on a document glass or a document set on an auto document feeder (ADF). The scanner 24 outputs image data of the document as a result of reading the image from the document.

Next, a configuration of the label printer 5 in the image forming system 1 according to the embodiment will be described.

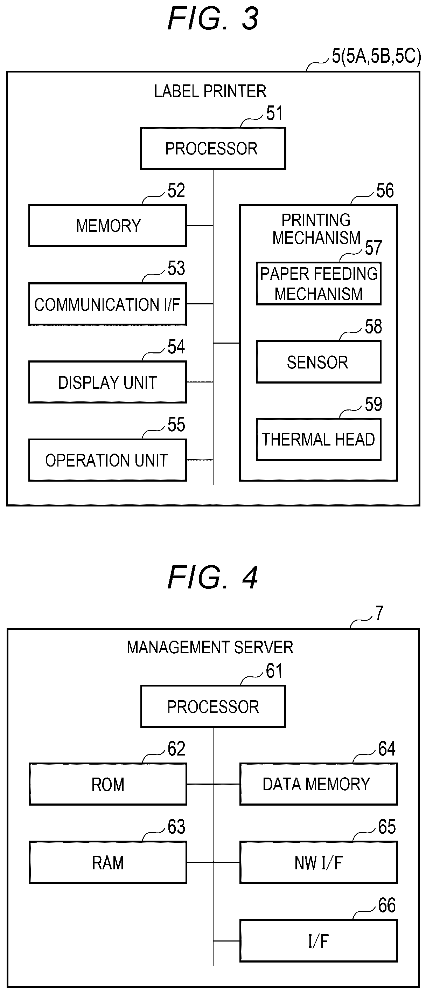

FIG. 3 is a block diagram illustrating a configuration example of the label printer 5 according to an embodiment.

As illustrated in FIG. 3, the label printer 5 includes a processor 51 (also referred to as a second processor 51), a memory 52, a communication interface (I/F) 53, a display unit 54, an operation unit 55, a printing mechanism 56, and the like.

The processor 51 executes programs for executing various kinds of processing. The processor 51 is, for example, a CPU. The processor 51 is connected to each unit in the label printer 5 via an internal interface. The processor 51 executes various kinds of processing by executing programs stored in the memory 52.

The memory 52 includes, for example, a ROM, a RAM, and a data memory. The ROM of the memory 52 is a non-rewritable nonvolatile memory, and stores a preset program, control data, and the like. The RAM of the memory 52 functions as a working memory or a buffer memory. The data memory of the memory 52 is a rewritable nonvolatile memory and stores data such as a program, control data, and setting information. The data memory of the memory 52 includes a storage area for securely storing key information for decrypting data encrypted by the digital multi-functional peripheral 3.

The communication interface 53 is a communication interface (third communication interface) for communicating with the digital multi-functional peripheral 3. The communication interface 53 may include an interface of a communication system corresponding to a communication interface provided in the digital multi-functional peripheral 3.

The display unit 54 is a display that displays operation guidance and the like. For example, the display unit 54 is implemented as a liquid crystal display device or an organic EL. The operation unit 55 receives an input operation from a user. For example, the operation unit 55 is implemented as a group of buttons to be pressed by a user. The operation unit 55 may be implemented by a touch panel provided on a display screen of the display unit 54.

The printing mechanism 56 prints an image on a medium. In the configuration example illustrated in FIG. 3, the printing mechanism 56 is a printing unit of a thermal method including a paper feeding mechanism 57, a sensor 58, a thermal head 59, and the like. In the printing mechanism 56, the paper feeding mechanism 57 feeds paper (or other media) for a label. The sensor 58 detects the paper or the like fed by the paper feeding mechanism 57 at a predetermined position (for example, a printing position or near a printing position). The thermal head 59 is driven and controlled according to an image to be printed, and prints an image on the paper or the like fed by the paper feeding mechanism 57. The printing mechanism 56 may be provided with a sensor for detecting various kinds of failures such as a paper jam.

In the present embodiment, it is assumed that the printing mechanism 56 has a specific function whose use is restricted by licensing. The restriction on use of the specific function may be cancelled according to a license provided from the digital multi-functional peripheral 3. For example, the printing mechanism 56 is set to be able to perform printing with a specific higher resolution using a license but not able to perform printing with the specific higher resolution when there is no license. As a specific example, if the printing mechanism 56 has a configuration capable of printing at both 200 dpi and 300 dpi, 300 dpi printing may require a license.

Next, a configuration of the management server 7 in the image forming system 1 according to the embodiment will be described.

FIG. 4 is a block diagram illustrating a configuration example of the management server 7 according to an embodiment.

As illustrated in FIG. 4, the management server 7 includes a processor 61, a ROM 62, a RAM 63, a data memory 64, an NW interface (I/F) 65, an interface 66, and the like.

The processor 61 executes programs for executing various kinds of processing. The processor 61 is, for example, a CPU. The processor 61 is connected to each unit in the management server 7 via an internal interface. The processor 61 executes various kinds of processing by executing programs stored in the ROM 62 or the data memory 64 using the RAM 63.

The ROM 62 is a non-rewritable nonvolatile memory. The ROM 62 stores a preset program, control data, and the like. The RAM 63 functions as a working memory or a buffer memory.

The data memory 64 is a rewritable nonvolatile memory. The data memory 64 stores various kinds of data including a program, control data, setting information, and the like. In the present embodiment, the data memory 64 stores information acquired from the digital multi-functional peripheral 3. The data memory 64 stores maintenance information about the digital multi-functional peripheral and maintenance information about each label printer 5 connected to the digital multi-functional peripheral 3 as the information acquired from the digital multi-functional peripheral 3. For example, the data memory 64 stores maintenance information in association with identification information for identifying the digital multi-functional peripheral 3 and each label printer 5.

The NW interface 65 is a communication interface for performing communication via a network. In the image forming system 1, the management server 7 communicates with the digital multi-functional peripheral 3 via a network through the NW interface 65.

The interface 66 is an interface for communicating with the billing server 8. For example, the interface 66 may be a communication interface for locally connecting to the billing server 8. If the management server 7 and the billing server 8 communicate with each other via a network, the interface 66 may be provided in the NW interface 65.

Next, processing will be described in which the management server 7 issues a license in response to a request from the digital multi-functional peripheral 3.

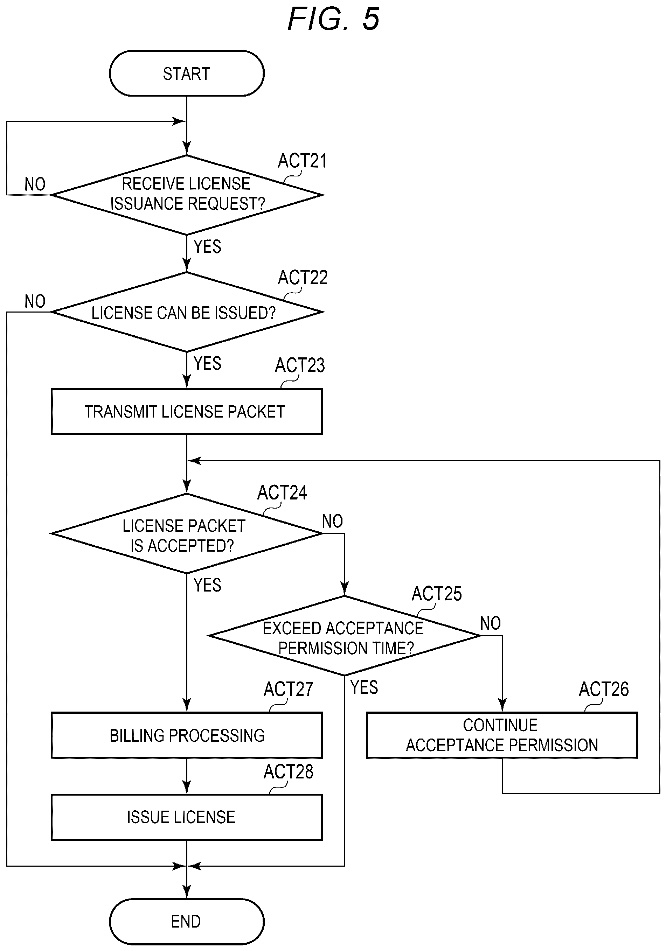

FIG. 5 is a flowchart illustrating the processing in which the management server 7 issues a license in response to a request from the digital multi-functional peripheral 3.

The management server 7 of the cloud service 9 communicates with the digital multi-functional peripheral 3 via the network through the NW interface 65. The processor 61 of the management server 7 receives an issuance request for a license to be provided to the label printer 5 from the digital multi-functional peripheral 3 through the NW interface 65 (ACT 21).

When the processor 61 receives the license issuance request from the digital multi-functional peripheral 3 (ACT 21, YES), the processor 61 determines whether the license requested to be issued can be issued (ACT 22). For example, the issuance request from the digital multi-functional peripheral 3 includes information for specifying a license to be issued. The processor 61 identifies the license to be issued from the issuance request and determines whether the specified license can be issued to the digital multi-functional peripheral 3. If the license requested to be issued cannot be issued (ACT 22, NO), the processor 61 notifies the digital multi-functional peripheral 3 serving as an issuance request source that the license cannot be issued, and ends the processing.

If the license requested to be issued can be issued (ACT 22, YES), the processor 61 of the management server 7 transmits a license packet including information indicating the license that can be issued to the digital multi-functional peripheral 3 (ACT 23). Here, the processor 61 may transmit fee information or the like for issuing the license to the digital multi-functional peripheral 3 as the license packet.

After transmitting the license packet, the processor 61 monitors whether the license packet is accepted in the digital multi-functional peripheral 3 (ACT 24). If the processor 61 confirms that the digital multi-functional peripheral 3 has not yet accepted the license packet (ACT 24, NO), the processor 61 next checks whether an acceptance permission time has been exceeded (ACT 25). If an elapsed time from the transmission of the license packet is still within the acceptance permission time (ACT 25, NO), the processor 61 continues waiting for acceptance (ACT 26) and returns the processing to ACT 24. If the license packet is not yet accepted and the acceptance permission time is exceeded (ACT25, YES), the processor 61 invalidates the license in the transmitted license packet and ends the processing.

If the digital multi-functional peripheral 3 accepts the license packet (ACT 24, YES), the processor 61 executes billing processing for issuing (validating) the license (ACT 27). The processor 61 causes the billing server 8 to execute settlement processing by a specific user for the fee for issuing the license. For example, the processor 61 acquires settlement information for settlement from the digital multi-functional peripheral 3 and causes the billing server 8 to execute fee settlement processing based on the acquired settlement information.

If the fee settlement associated with the issuance of the license is completed, the processor 61 of the management server 7 executes license issuance processing (ACT 28). For example, the processor 61 of the management server 7 issues (validates) the license in the license packet transmitted to the digital multi-functional peripheral 3 by managing the license as having been issued. The processor 61 notifies the digital multi-functional peripheral 3 that issuance of the license and settlement is completed, and permits the digital multi-functional peripheral 3 to use the license.

As described above, the management server 7 of the image forming system 1 can issue a license that can be provided to the label printer 5 in response to an issuance request from the digital multi-functional peripheral 7. Further, the management server 7 can perform fee settlement associated with the issuance of the license in response to a request from the digital multi-functional peripheral 3 in cooperation with the billing server 8.

Next, an operation of the digital multi-functional peripheral 3 serving as an image forming device including a license management device in an image forming system 1 serving as the license management system according to an embodiment will be described.

The digital multi-functional peripheral 3 functions as an image forming device and also as a license management device that manages a license to be provided to each label printer 5. It is assumed in this example that an application program for license management (license management program) has been installed in the system control unit 21 of the digital multi-functional peripheral 3.

The system control unit 21 operates as a license management device by executing the installed license management program. For example, the license management program is loaded in the data memory 34 and executed by the processor 31. The processor 31 executes the license management program to manage a license for each label printer 5 connected to the digital multi-functional peripheral 3.

First, processing will be described in which the digital multi-functional peripheral 3 acquires a license issued by the management server 7.

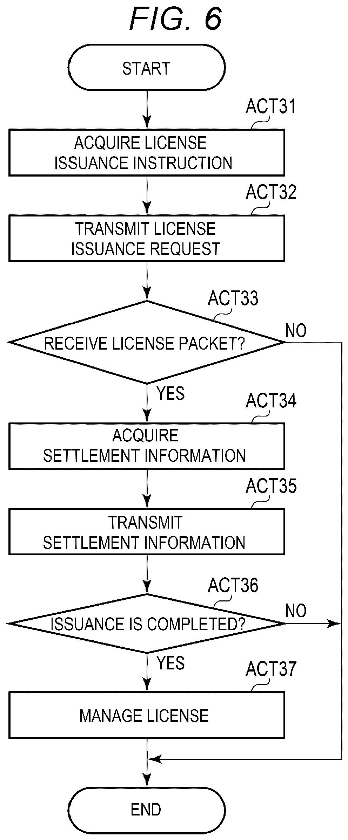

FIG. 6 is a flowchart of the processing in which the digital multi-functional peripheral 3 acquires a license issued by the management server 7.

Here, it is assumed that a specific user, such as an administrator, having a management authority of the label printer 5 requests for a license that can be provided to the label printer 5 to be issued. The processor 31 of the system control unit 21 of the digital multi-functional peripheral 3 receives an input from the specific user about an issuance instruction of a license that can be provided to the label printer 5 (ACT 31).

For example, the processor 31 logs a user in the management server 7 as a specific/authorized user by user authentication according to authentication information input by the user made by using the operation device 43 or the like. If the specific user successfully logs into the management server 7, the processor 31 can receive the input of the specific user about an issuance instruction of a license. Here, the specific user uses the operation device 43 or the like to input information for specifying a license to be issued and its issuance.

If an issuance instruction of the license is input, the processor 31 transmits an issuance request to the management server 7 (ACT 32). After transmitting the license issuance request, the processor 31 waits for a response from the management server 7. If a license packet corresponding to the issuance request cannot be acquired from the management server 7 (ACT 33, NO), the processor 31 determines that the license cannot be issued and ends the processing.

If the license packet is received as a response to the issuance request (ACT 33, YES), the processor 31 receives a license issuance confirmation as indicated by the license packet (ACT 34). The processor 31 receives the issuance confirmation and an input of settlement (payment) information of the specific user for the fee required for issuing the license. After the specific user inputs an issuance confirmation and the settlement information using the operation device 43 or the like, the processor 31 transmits the input issuance confirmation and settlement information to the management server 7 (ACT 35). Accordingly, the management server 7 executes billing processing and license issuing processing according to settlement information provided.

If a notification indicating the completion of the license issuance cannot be received from the management server 7 (ACT 36, NO), the processor 31 determines that the license cannot be issued and ends the processing. For example, if the billing processing in the billing server 8 based on the settlement information fails, the processor 31 receives a notification from the management server 7 indicating that the license cannot be issued due to a billing failure. In this case, the processor 31 displays, on the display device 42, information indicating that the license cannot be issued due to a billing failure, and ends the processing.

If a notification indicating the completion of the license issuance is received from the management server 7 (ACT 36, YES), the processor 31 can provide the license issued by the management server 7 to the label printer 5 (ACT 37). That is, the processor 31 stores the license issued by the management server 7 in license management table 341 and can provide the license to the label printer 5 accordingly.

As described above, a digital multi-functional peripheral 3 including a license management device can request for the management server 7 to issue a license for a label printer 5 in response to an issuance instruction from an authorized user. The digital multi-functional peripheral 3 can thus acquire a license issued by the management server 7 in response to an issuance request and manage the license for the label printer(s) 5. Furthermore, the digital multi-functional peripheral 3 enables a specific user to perform the fee settlement associated with the issuance of the license based on provided settlement information, and can issue a license and execute fee settlement for each user accordingly.

Next, license management processing executed by the digital multi-functional peripheral 3 will be described.

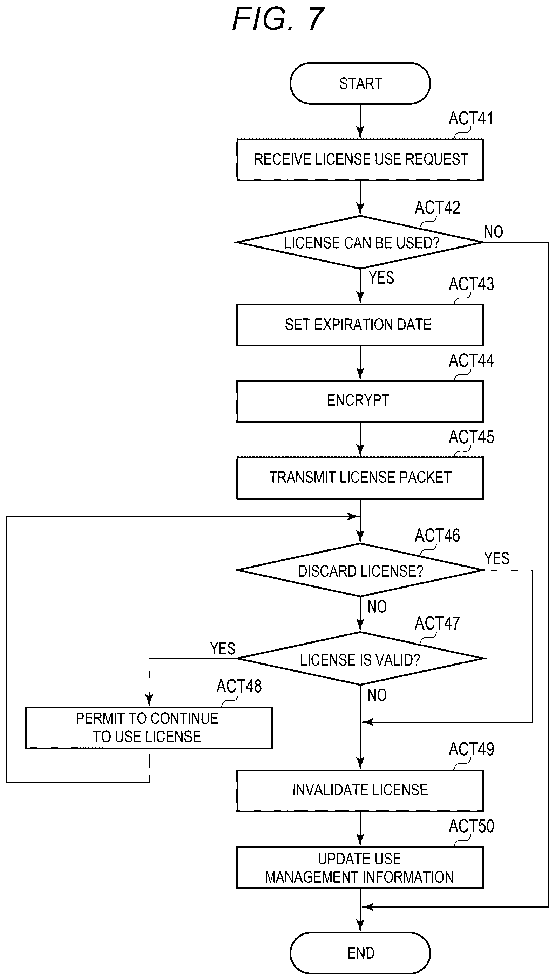

FIG. 7 is a flowchart of the license management processing executed by the digital multi-functional peripheral 3 according to an embodiment.

The processor 31 of the digital multi-functional peripheral 3 receives a license use request (e.g. , a request to cancel a use restriction set for a specific function) from the label printer 5 that can communicate with the digital multi-functional peripheral 3 through the communication interface 35 (ACT 41). The license use request from the label printer 5 specifies information indicating a requested license or alternatively information indicating a request to use a specific license-controlled function that can be used only when licensed. Additionally, the use request may specify a period (use period) in which the license may be used in the label printer 5 (e.g., a license period).

When a license use request is received, the processor 31 determines whether the license requested to be used can be provided to the label printer 5 (ACT 42). For example, the processor 31 refers to the license management table 341 and determines whether the license requested to be used can be provided to the label printer 5.

If the requested license cannot be provided to the label printer 5 at this time (ACT 42, NO), the processor 31 notifies the label printer 5 sending the request that the license cannot be provided, and ends the processing. For example, the processor 31 may notify the label printer 5 of a reason why the requested license cannot be provided at this time. In this case, the label printer 5 that requested the license may display the reason why the license cannot be provided on the display unit 54 based on a notification from the digital multi-functional peripheral 3.

If the license can be provided (ACT 42, YES), the processor 31 sets an expiration date/time for the license to be provided to the label printer 5 (ACT 43). For example, the expiration date/time added to the license may be a predetermined fixed period, may be set based on the use period specified in the use request sent from the label printer 5, or may be an indefinite date. Alternatively, it may be not always be necessary to add an expiration date to the license. After the processor 31 determines the expiration date for the license, the processor 31 creates license data (a license packet) in which expiration date information has been added to the license for use of a specific function.

After the license data is created, the processor 31 encrypts the created license data using an encryption key for the label printer 5 to which the license is to be provided (ACT 44). The encryption key may be any encoding or the like that encrypts the license data in a manner that only the label printer 5 to which the license is to be provided can decrypt the license data. That is, the encryption key used for encryption may be any key corresponding to a decryption key held by the label printer 5 to which the license is to be provided. For example, the digital multi-functional peripheral 3 securely stores an encryption key in the printer management table 342 for each label printer 5. Accordingly, the encrypted license data can be decrypted only by the label printer 5 to which the license is sent, and the license data can be acquired only by the intended label printer 5.

After the license data is encrypted, the processor 31 transmits the encrypted license data to the requesting label printer 5 to which the license is to be provided (ACT 45). After the license data is transmitted, the processor 31 records information indicating that the license was provided to the label printer 5 in the license management table 341. Furthermore, the processor 31 monitors a use state of the license in the label printer 5 that received the license data.

After the encrypted license data has been transmitted, the processor 31 may receive information for discarding the license from the label printer 5 (ACT 46). For example, if processing using the provided license has been completed, the label printer 5 may send the digital multi-functional peripheral 3 information requesting the discarding or the license. If the processor 31 receives a request for discarding the license from the label printer 5 (ACT 46, YES), the processor 31 invalidates the license in the label printer 5 (ACT 49).

Here, invalidating the license in the label printer 5 refers to cancelling the license previously provided (assigned) to the label printer 5. The digital multi-functional peripheral 3 may invalidate the use of the license in a label printer 5 (cancels the license previously provided to the label printer 5) to permit reassignment of the license to another label printer 5 or the like.

If the license is not to be discarded at this time (ACT 46, NO), the processor 31 continues to monitor validity of the license provided to the label printer 5 (ACT 47). For example, the processor 31 checks whether the license is still valid based on whether the expiration date/time added to the license for the label printer 5 has been exceeded. In this case, the processor 31 determines that a license still within its expiration date is valid (ACT 47, YES), and permits continued use of the license (ACT 48). The processor 31 determines that a license exceeding the expiration date is now invalid (ACT 47, NO), and invalidates the use of the license in the label printer 5 (that is, cancels the license assigned to the label printer 5) (ACT 49).

The processor 31 of the digital multi-functional peripheral 3 may also invalidate the use of a license in a label printer 5 if the license has not been used within some specified time period. In this case, the processor 31 determines whether the license is still valid based on whether the license has been used within a specified time. For example, if the license has been used within the specified time, the processor 31 determines that the license is still valid (ACT 47, YES) and permits continued use of the license (ACT 48). If the license has not been used within the specified time, the processor 31 determines that the license is invalid (ACT 47, NO), and invalidates the use of the license by the label printer 5 (ACT 49).

If the use of the license in the label printer 5 is invalidated, the processor 31 updates management information of the license in the license management table 341 (ACT 50). For example, the processor 31 lists the invalidated license as a license that can now be provided again or to another label printer 5 in the license management table 341. Accordingly, the processor 31 can collect the license whose use in a specific label printer 5 has been invalidated and manage the re-collected license as a license that can be provided to a label printer 5 again.

Next, an operation of the label printer 5 to which a license has been provided from the digital multi-functional peripheral 3 will be described.

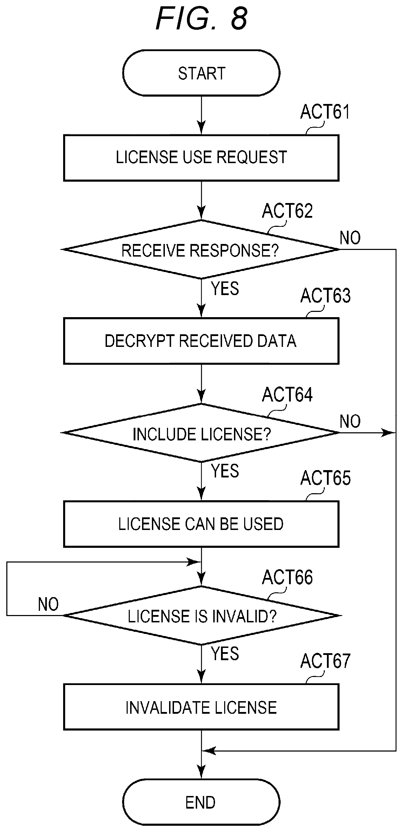

FIG. 8 is a flowchart illustrating an operation of the label printer to which a license has been provided from the digital multi-functional peripheral 3.

If the label printer 5 executes a specific function that requires a license, the label printer 5 sends a request to the digital multi-functional peripheral 3 to use the license. For example, the processor 51 of the label printer 5 receives an execution instruction for the specific function from a user via the operation unit 55. If the execution instruction of the specific function is received, the processor 51 connects to the digital multi-functional peripheral 3 including the license management device through the communication interface 53. Once connected to the digital multi-functional peripheral 3, the processor 51 transmits a license use request to the digital multi-functional peripheral 3 (ACT 61).

After the license use request is transmitted to the digital multi-functional peripheral 3, the processor 51 waits for a response to the use request from the digital multi-functional peripheral 3 (ACT 62). If the processor 51 receives a response indicating that a license cannot be provided or if no response to the use request is received (ACT 62, NO), the processor 51 determines that the license cannot be acquired and ends the processing. For example, the processor 51 displays on the display unit 54 that the specific function cannot be executed because a license cannot be acquired, and ends the processing.

If the processor 51 receives data serving as the response to the use request (ACT 62, YES), the processor 51 decrypts the received data using decryption key information held in the processor 51 (ACT 63). If the license data is not encrypted, the processor 51 may omit the processing in ACT 63.

After the processor 51 of the label printer 5 decrypts the received data, the processor 51 determines whether the decrypted data includes a license (ACT 64). If the decrypted data does not include a license (ACT 64, NO), the processor 51 determines that a license cannot be acquired and ends processing. For example, the processor 51 displays on the display unit 54 that the specific function cannot be executed because a license cannot be acquired, and ends the processing.

If the decrypted data includes a license (ACT 64, YES), the processor 51 acquires the license included in the decrypted data. After the license is acquired, the processor 51 sets the specific function to be executable by, for example, cancelling a use restriction in view of the acquired license (ACT 65). The processor 51 of the label printer 5 executes printing processing using the specific function according to a user instruction when the license is usable.

The processor 51 permits the execution of the specific function after the use restriction has been cancelled in view of the license, and then begins to monitor validity of the license (ACT 66). For example, if an expiration date is added to the license, the processor 51 monitors the expiration date in view of the current date. If the license remains valid (ACT 66, NO), the processor 51 permits use of the specific function (the licensed function). If it is determined that the license is invalid (ACT 66, YES), the processor 51 invalidates the use of the license (ACT 67). For example, if the expiration date added to the license is exceeded, the processor 51 set the license to be unusable and invalidates the license.

The processor 51 may also invalidate a license if the license is not used within a specified time. For example, the processor 51 may determine whether the license is still valid based on whether the license has been used within some specified time since last use or the like.

Alternatively, the digital multi-functional peripheral 3 may monitor validity of the license. In this case, the processor 51 of the label printer 5 determines whether the license is invalidated based on an instruction/response from the digital multi-functional peripheral 3. That is, if an instruction to invalidate the license has been given by the digital multi-functional peripheral 3, the processor 51 may reimpose a use restriction on the specific function (invalidate the license).

As described above, the digital multi-functional peripheral 3 including a license management device acquires a license that can be provided to the label printer 5 by the management server 7. The digital multi-functional peripheral 3 manages the licenses for the label printers 5, and provides the licenses as appropriate in response to a request from a label printer 5.

Accordingly, the digital multi-functional peripheral 3 can issue and manage a license to be applied to the label printer 5, thereby eliminating the need for issuing and managing the licenses in each label printer 5. Furthermore, since the digital multi-functional peripheral 3 can collectively manage licenses to be provided to a plurality of label printers 5, efficient license management can be performed in the entire system. Further, as a result of the above-described license management, a specific function of the label printer 5 can be used at low cost, which improves convenience for a user.

The digital multi-functional peripheral 3 including the license management device may set an expiration date for a license to be provided to the label printer 5. In this case, the digital multi-functional peripheral 3 invalidates the use of an expired license in the label printer 5 and may collect the previously issued licenses. Accordingly, the digital multi-functional peripheral 3 can manage the use of licenses based on an expiration date added to the license provided to the label printers 5. As a result, the digital multi-functional peripheral 3 can manage licenses provided to a plurality of label printers 5 as floating licenses, and can achieve efficient license management.

If an issued license has not been used within a specified time (e.g., not recently), the digital multi-functional peripheral 3 including the license management device can invalidate the particularly issued license to permit a reissuance or otherwise. Accordingly, the digital multi-functional peripheral 3 can collect the stale licenses from the label printers 5. As a result, the digital multi-functional peripheral 3 can manage the licenses according to an actual use state in each label printer 5, and can achieve efficient license management in the entire system.

In an embodiment, the license managed by the digital multi-functional peripheral 3 cancels a use restriction on a specific function. However, the license is not limited to one that cancels a use restriction of a specific function. For example, the license may be a license for updating software, a program, or control data utilized by a processor 51 of a label printer 5. In this case, the digital multi-functional peripheral 3 including a license management device can control any function implemented by or in conjunction with software in each label printer 5 by providing a license for such functions or operations.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claim and their equivalents are intended to cover such forms or modifications as would fall within the scope and scope of the disclosure, and are included in the scope of the disclosure.

## Claims

1. A license management device, comprising:
a first communication interface configured to communicate with a management server;
a second communication interface configured to communicate with a printing device having a specific function whose use restriction is controlled by a license issued by the management server;
a memory to store a license management table that stores the license issued by the management server and acquired through the first communication interface; and
a processor configured to provide the printing device with the license stored in the license management table in response to a request from the printing device through the second communication interface.

2. The license management device according to claim 1, wherein
the processor transmits the license to the printing device in an encrypted format specific to the printing device.

3. The license management device according to claim 1 or 2, wherein the processor is configured to store the license in the license management table indicating the license is able to be provided again after the license has been invalidated in the printing device.

4. The license management device according to any one of claims 1 to 3, wherein the processor is configured to set an expiration date for the license provided to the printing device.

5. The license management device according to any one of claims 1 to 4, wherein the processor is configured to invalidate the license in the printing device after a period of non-use of the specific function of the printing device exceeds a predetermined length of time.

6. The license management device according to any one of claims 1 to 5, wherein
the printing device is a thermal printer with variable resolution printing capability, and
the specific function is high-resolution printing.

7. The license management device according to any one of claims 1 to 6, further comprising:
a printer unit; and
a scanner unit.

8. A license management system. comprising:
a license management device; and
a printing device, wherein
the license management device includes:
a first communication interface configured to communicate with a management server;
a second communication interface configured to communicate with the printing device;
a memory to store a license management table that stores a license issued by the management server and acquired through the first communication interface; and
a first processor configured to provide the printing device with the license stored in the license management table in response to a request from the printing device through the second communication interface; and
the printing device includes:
a printing mechanism having a specific function set whose use restriction is controlled by the license issued by the management server;
a third communication interface configured to communicate with the license management device; and
a second processor configured to permit use of the specific function of the printing mechanism based on the license acquired from the license management device through the third communication interface.

9. The license management system according to claim 8, wherein the first processor transmits the license to the printing device in an encrypted format specific to the printing device.

10. The license management system according to claim 8 or 9, wherein the first processor is configured to store the license in the license management table indicating the license is able to be provided again after the license has been invalidated in the printing device.

11. The license management system according to any one of claims 8 to 10, wherein the first processor is configured to set an expiration date for the license provided to the printing device.

12. The license management system according to any one of claims 8 to 11, wherein the second processor is configured to invalidate the license in the printing device after a period of non-use of the specific function of the printing device exceeds a predetermined length of time.

13. The license management system according to any one of claims 8 to 12, wherein
the printing device is a thermal printer with variable resolution printing capability, and
the specific function is high-resolution printing.

14. The license management system according to any one of claims 8 to 13, wherein the license management device further includes:
a printer unit; and
a scanner unit.

15. The license management system according to any one of claims 8 to 14, wherein the license management device is a multifunctional peripheral device.
